# EUROPEAN PATENT SPECIFICATION

(11) **EP 0 530 927 B1**
(45) Date of publication and mention of the grant of the patent: **03.01.1996**
(21) Application number: 92202845.1
(22) Date of filing: 21.09.1987
(51) Int. Cl.: G02B 26/08

(54) **Optical switch**
Optischer Schalter
Commutateur optique

(30) Priority: 07.10.1986 GB 8624001; 18.08.1987 GB 8719478
(43) Date of publication of application: 10.03.1993
(62) Divisional of application: 87907044.9
(73) Proprietor: THE WHITAKER CORPORATION, Wilmington, Delaware 19808 (US)
(72) Inventor: Ten Berge, Eduardus Franciscus Antonius, NL-5151 SL Drunen (NL); Van Alst, Gerardus Maria, Oss (NL)
(74) Representative: Warren, Keith Stanley

(56) References cited:
- DE-A- 3 012 450
- GB-A- 2 088 083
- PATENT ABSTRACTS OF JAPAN vol. 13, no. 131 (P-850)(3479) 31 March 1989 & JP A 63301918
- PATENT ABSTRACTS OF JAPAN vol. 6, no. 84 (P-117)(962) 22 May 1982 & JP A 57020702

## Description

This invention relates to a switch mechanism for aligning alternative optical fibers in optical alignment.

The present invention has been divided from European Patent Application No. 87907044.9.

In one type of known electromagnetic optical switch, first and second optical fibers have respective first and second end portions mounted for relative lateral movement to bring optical end faces into and out of optical alignment in different switching positions, which fiber end portions are fixed, for example by adhesive, in grooves provided in respective ferromagnetic metal carrier blocks, the first of which is normally stationary, the second movable forming the switch armature.

According to one aspect thereof the present invention consists in an optical switch for varying the light path of an optical fiber includes a first optical fiber which is movable between first and second positions which places the first optical fiber into alignment with either a second or third optical fiber, and alignment means for aligning the first and second, and first and third optical fibers in alignment with end faces of the fibers in an opposed relationship, the switch being characterized in that: the alignment means includes means to move the second or third optical fibers along an axial direction out of an abutting relationship with the first said optical fiber during the transverse movement of the opposed end faces, and the second or third optical fibers into an abutting relationship when respective opposed end faces are aligned.

According to another aspect thereof the present invention consists in an optical switch for varying the light path of an optical fiber including a first optical fiber which is movable between first and second positions which places the first optical fiber into alignment with either a second or third optical fiber, and alignment means for aligning the first and second, and first and third optical fibers in alignment with end faces of the fibers in opposed relationship, the alignment means including two channels extending substantially along the length of the second and third fibers and the first said fiber being movable between the two channels into and out of alignment with the second and third fibers, the switch being characterized in that: a plurality of first optical fibers are included which upstand in a direction which is transverse to their length and a like plurality of second and third optical fibers are included, the movement of the first optical fibers causing the alignment between respective first optical fiber ends with either the second optical fiber ends or the third optical fiber ends, the alignment means including means to move the second or third optical fibers along an axial direction out of abutting relationship with the first optical fibers during the transverse movement of the opposed end faces, and the second or third optical fibers into abutting relationship when respective opposed end faces are aligned.

The means to move the second or third optical fibers in an axial direction may comprise a band portion around an end of the second or third optical fibers and including a recessed portion on a side edge of the switch plate member with the band portions of the second and third optical fibers in a spring loaded condition against the side edge of the switch plate with only one band portion in alignment with the recessed portion at any location of the switching plate. Transverse movement of the switching plate moves the first optical fiber into and out of optical alignment with the second or third optical fiber and the recessed portion cams the second or third optical fiber out of an abutting relationship with the first said fiber. The recessed portion of the switching plate is profiled to move either the second or third optical fiber out of an abutting relation with the first optical fiber prior to the transverse movement of the two opposed end faces of the first and second or the first and third optical fibers.

Embodiments of the present invention will now be described by way of example with reference to the accompanying drawings in which:
Figure 1 is an isometric view of an assembled fiber optic switch according to a first embodiment of the invention;
Figures 2A-2D show schematically the switching arrangements between optical fibers of the switch;
Figure 3 shows an exploded isometric view showing numerous components of the optical fiber switch;
Figure 4 is an enlarged plan view, partly in section, of one end of the switch showing an intermediate optical fiber in a lower position,
Figure 5 is a view similar to that of Figure 4 showing the intermediate optical fiber transferred to an upper position,
Figure 6 and Figure 7 are fragmentary sectional views showing the positions of the fiber optic connectors of the switch when moved forward and rearward during the switching movement shown in Figures 4 and 5, and
Figure 8 is a fragmentary isometric view of a second embodiment of the switch where several optic fibers, in the form of ribbon optical cable, are used as the switching media.

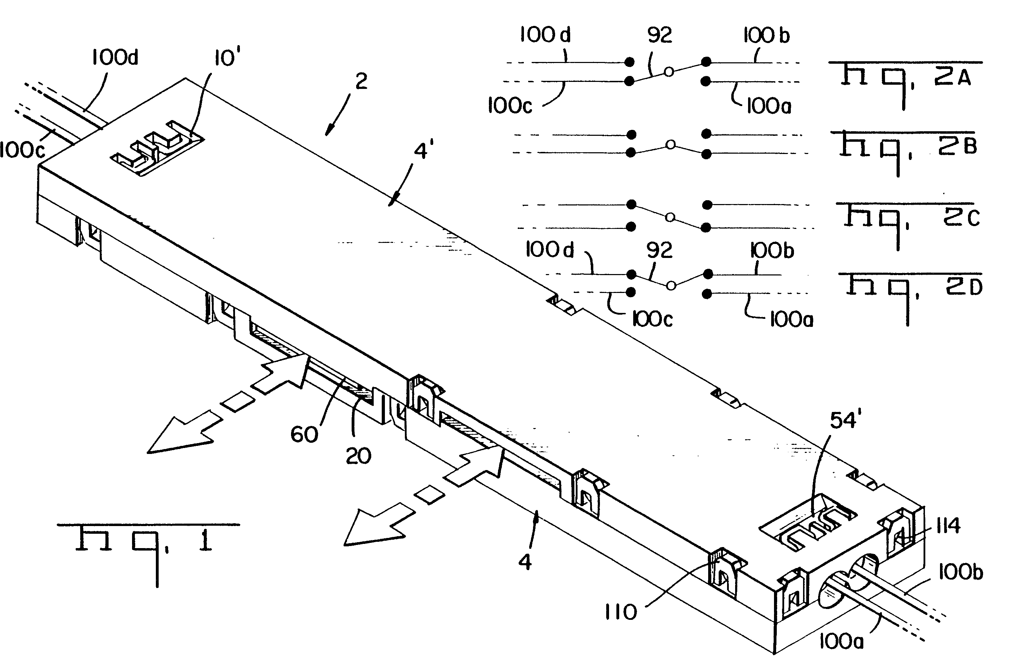

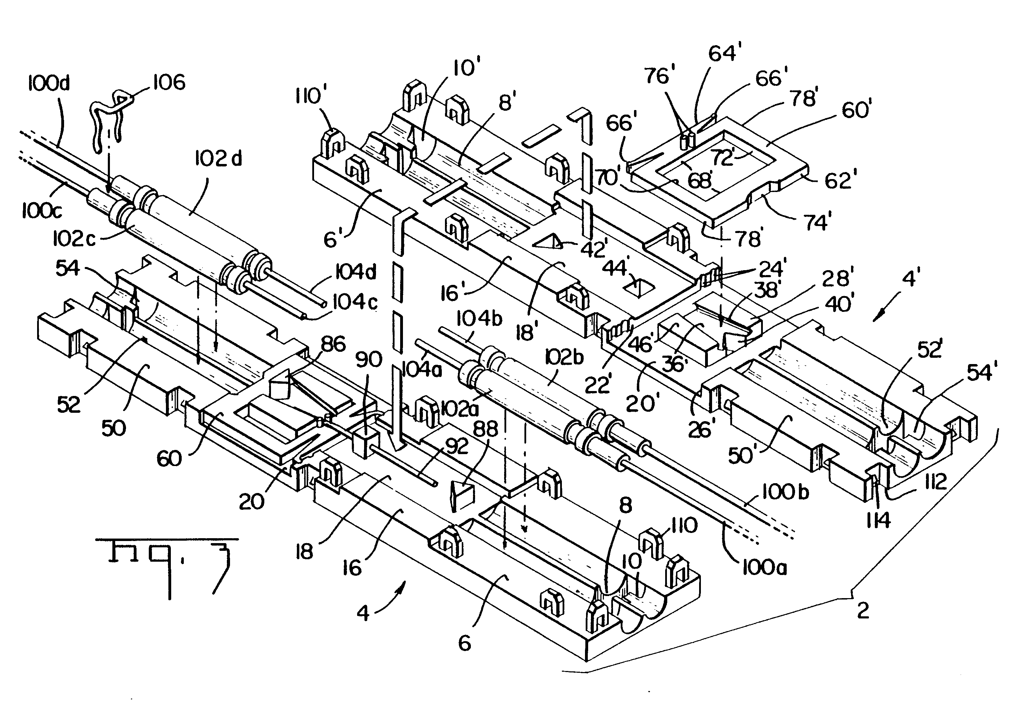

Figure 1 is an isometric view of a fiber optic switch of the first embodiment of the invention, which includes a plurality of switched interconnections thereby interconnecting optical fibers 100a-100d. More specifically, the switched locations are shown in Figure 2A-2D schematically whereby the optical fibers 100a-100d are interconnected by an intermediate optical fiber such as 92. The fiber optic switch includes two optical fibers at each end such as 100a and 100b, and two optical fibers at the opposite end such as 100c and 100d, lending to a multiple of four switched positions, as shown in Figures 2A-2D; thus, the switch is typically referred to as a two by two switch.

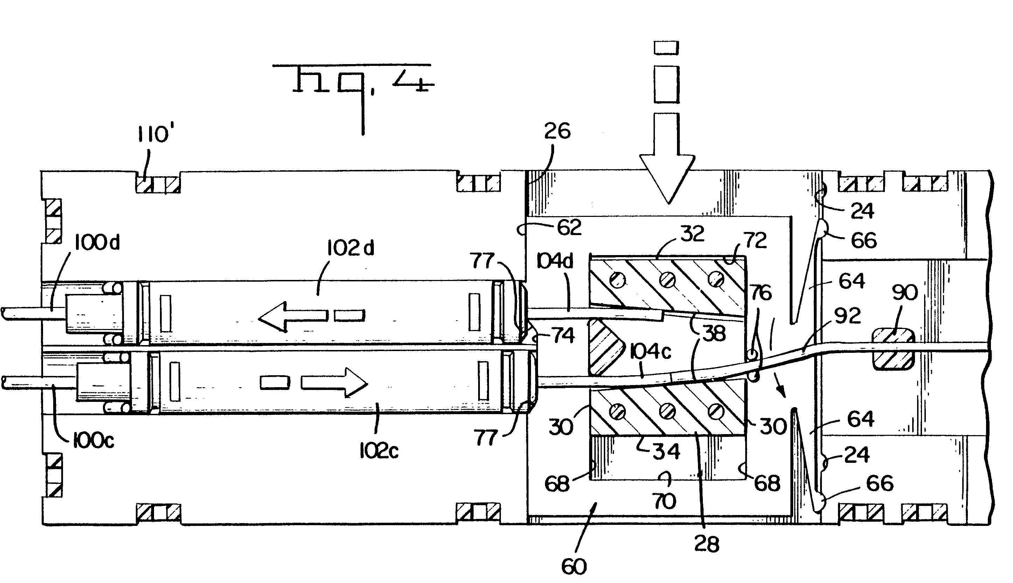

With reference to Figure 3, the switch will now be described in greater detail. The switch 2 includes two identical, or hermaphroditic, switch housing halves such as 4 and 4', thus while describing the details of the housing halves, only one such half will be described. It should be understood that the other housing half includes an identical component or characteristic as the one being described. It should also be noted that the second switch housing half is numbered in prime numerals to indicate the like component on the first switch housing half.

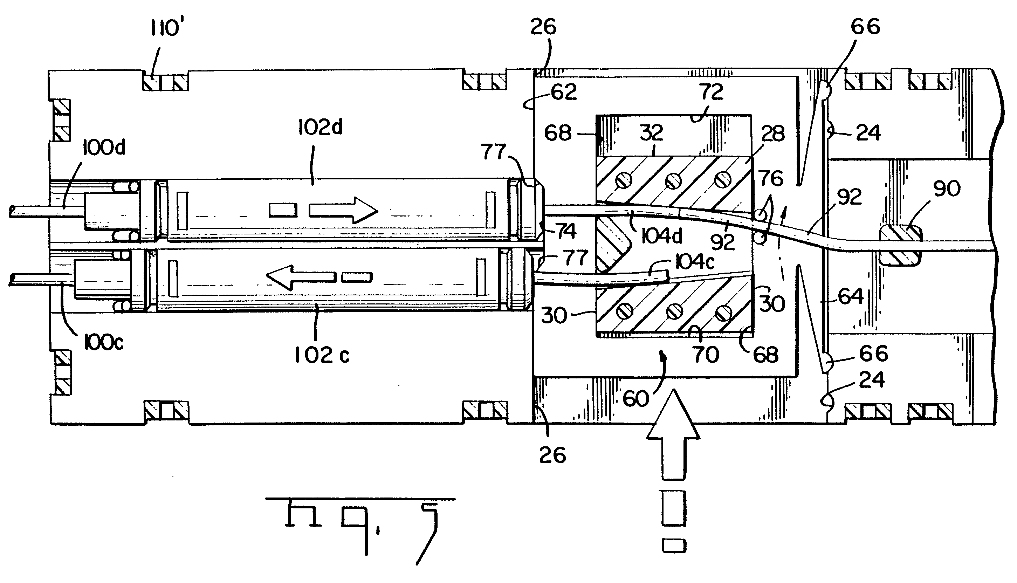

Referring first to switch housing half 4', it should be noted that a first end includes a surface 6' with semicircular fiber optic receiving troughs 8' therein. Proximate the ends of the troughs 8' and located in each trough 8' are U-shaped recesses 10'. Towards the center of the switch housing half 4' are raised surfaces 16' with a recessed surface 18' intermediate the raised surfaces 16'. Recesses 44' and 42' extend into the surface 18' and their function will be described in greater detail subsequently. The second end of the switch housing half 4' includes a switching surface 20' which is bounded by side walls 22' and 26' and includes an island 28' symmetrically located centrally of the side walls and along the axial centerline of the switch housing half. Referring momentarily to Figure 4, it should be noted that the island 28 includes side walls 30 and a first end wall 32 and a second end wall 34. Referring back to Figure 3 shows that the island 28' includes a recess 36' along the axial centerline of the island and includes two V-grooves 38' which converge towards the center of the switch housing half 4', as will be described subsequently. The island 28' further includes a recess 40' which in combination with recess 42' are symmetrically located with respect to the center recess 44'. It should also be noted that the side wall 22' includes two detent notches 24' located adjacent to each outer edge. The switch housing half 4' further includes a second fiber optic receiving end having a surface 50' which again includes two fiber optic receiving troughs such as 52'. Each trough 52' includes a U-shaped recess 54'.

A switching plate such as 60' includes a first side wall 62' and oppositely facing spring fingers 64' including detent nodes such as 66'. The switching plate 60' further includes inner side walls 68' and inner end walls 70' and 72'. It should be noted that the inner side walls 68' and inner end walls 70' and 72' collectively define a recess to be received over the island 28' located on surface 20' of the switching housing half 4'. Switching plate 60' further includes a recess 74' along the side wall 62' centrally located therealong. Switching plate 60' also includes two pins 76' upstanding from the upper surface of the plate.

As shown in Figure 3, the switch assembly 2 further comprises optical fibers such as 100a-d which include fiber optic connectors such as 102a-d thereon allowing a free end 104 a-d of the fibers to extend from the end of the connectors. The connectors could be of the type shown in our US-A-4 435 038; and 4.669 820. Although a connector is described, a band portion could be included around the fiber adding further rigidity as required for the switching operation.

The optical fibers are plated externally with a metallic coating to provide a resilient nature to the optical fiber. For this reason, the device comprising the plated optical fiber is sometimes referred to as an optical needle.

The switch assembly 2 is assembled by placing the switching plates 60 and 60' over the respective islands 28 and 28' and between side walls 22 and 26. The switching plates 60 and 60' are so profiled that the spring fingers are in a resiliently biased condition when placed between the side walls 22 and 26 such that the spring fingers bias the side wall 62 of the switch plate against the side wall 26 of the switch housing half 4. An intermediate optical fiber 92, which includes an integrally formed insert such as 90, is then placed within the aperture 44 of the center of the plate 4 with free ends of the needle 92 laced between respective pins 76 of the switch plate 60. The inserts 86 and 88 are also inserted at this time, into respective apertures 40 and 42. It should be noted that the housing half 4' includes apertures 40', 42' and 44' which will overlie the respective inserts 88, 86 and 90, thereby retaining the inserts in a fixed relationship. The switch housing half 4' further includes complementary troughs 52' and 8' which will overlie the troughs 8 and 52, respectively. Each switch housing half includes latching arms such as 110, 110' and complementary recesses 112, 112' including latching surfaces 114, 114' thereby latching the two housing halves together.

Once the two housing halves 4, 4' are latched together, the fiber optic connectors 102a-d are then slid into place from the openings formed by the overlapping troughs, with the fiber optic ends 104a-d, respectively, located within the V-grooves such as 38. The connectors are placed within the openings such that the optic fiber ends are positioned between the inserts 86, 88 and between the V-grooves 38, 38'. As noted before, the V-grooves 38 are inwardly converging and the exterior of the optical fibers are plated with a metallic material, such that the fiber optic ends 104a and 104b become spring biased within the V-grooves 38.

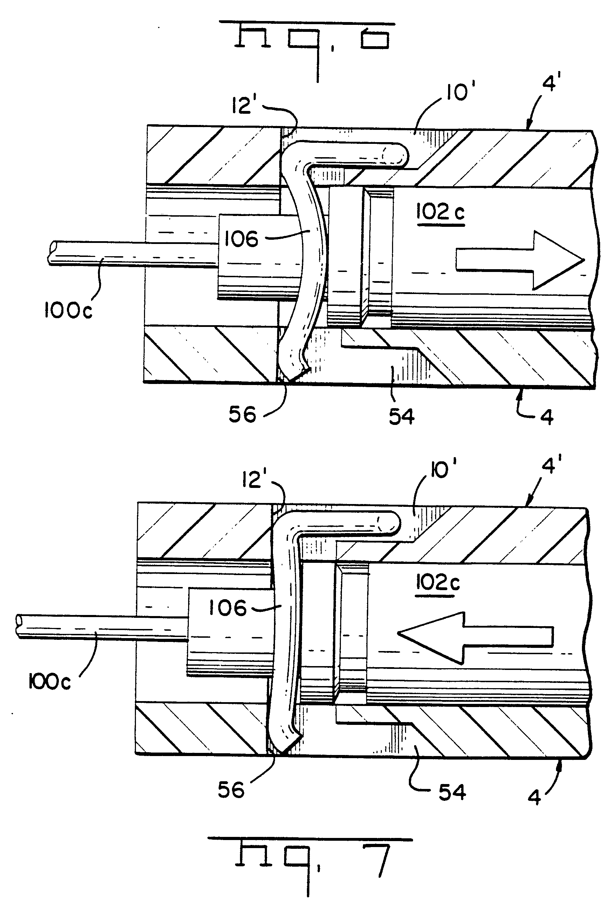

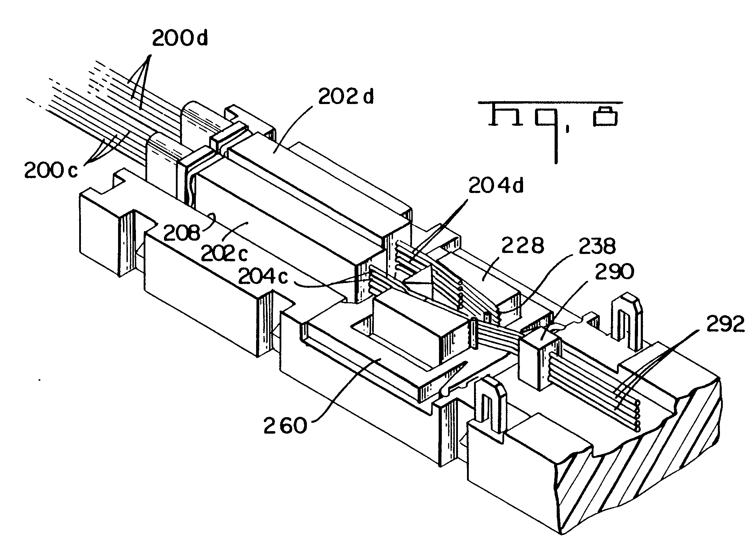

Once the two housing halves are sandwiched together and the connectors 102a-d are inserted, U-shaped retaining springs such as 106 can be placed within the spring receiving apertures formed by recess 10 and 54' at one end and 10' and 54 at the opposite end. As shown in Figure 6, the recess 10' includes a back surface 12' while the recess 54 includes a rear surface 56. Thus, the U-shaped spring 106 is spring biased against an end of the fiber optic connectors 102a-102d and end surfaces 12' and 56. It should be understood by the sequence of assembly that the connectors and associated optic fibers are removable and reinsertable without disassembling the housing halves. With the switch so assembled, the operation can be described in greater detail.

Referring to Figure 4, the switch plate 60 is shown in a lower position where end wall 32 of the island 28 is adjacent to the end wall 72 of the switch plate while inner end wall 70 of the switch plate is spaced from the end wall 34 of the island 28. It should be noted that the switch plate 60 is movable in the opposite direction, to a position as shown in Figure 5, to the extent of the space between surfaces 34 and 70. It should also be noted that the pairs of detents 24 are appropriately spaced such that the detent nodes 66 on the spring fingers 64 are appropriately located within the detents 24 when the switch plate is moved into the upper or lower position. As shown in Figure 4, the intermediate optical fiber 92 is placed between the two pins 76 on the switch plate which retains the optical fiber 92 in a resiliently biased condition within the V-groove 38 of the island such that the two end faces of the optical fibers 104c and 92 are in an abutting condition. According to the present invention the switch plate 60 includes the recess 74 which allows the fiber optic connectors 102a-d to be axially movable within their respective trough such that the end face of the optical fibers 104a-d are movable towards and away from the end faces of optical fiber 92. It is important for the optical transmission of the signals for the end faces to be in an abutting relationship. However, it is detrimental to the durability of the end faces, if the end faces of the optical fibers are in an abutting relationship when the abutting fibers are switched out of a mating relationship, as the movement of the two fibers transversely can harm the end optical surfaces of the fibers. Advantageously, the recess 74 includes ramped surface such as , which cams against the end of one of the respective connectors such as 102c or 102d, to move the connector away from and out of an abutting relationship with the optical fiber 92.

For example, Figure 4 shows connector 102c forward of the connector 102d such that the inward end of the connector 102c lies within the recess 74 of the switch plate 60. This allows the end face of optical fiber 104d to be in an abutting relationship with the end face of the intermediate optical fiber 92. However, when the switch plate 60 is moved upward to the position shown in Figure 5, the camming surface 76 moves the connector 102c rearwardly, taking the end face of the optical fiber 104c out of an abutting relationship with the end face of the optical fiber 92 prior to the transverse movement of the two faces across each other. When the switch plate 60 is moved into its fully upward position, as shown in Figure 5, the fiber optic connector 102d can then move inwardly into the recess 74 and the end face of the optical fiber 104d can move into an abutting relationship with the end face of the optical fiber 92. Figures 6 and 7 illustrate how the U-shaped retaining spring is located within the apertures formed by the respective recesses 10 and 54 such that the U-shaped clips maintain a constant inward force on the ends of the connector. Thus, Figure 6 would be illustrative of the position of fiber optic connector 102c in the position shown in Figure 4, while Figure 7 would be illustrative of the fiber optic connector 102d shown in Figure 4.

Advantageously, the spring fingers 64 retain the plate 60 within the housing half 4 such that the side edge 62 is in an abutting manner against the sidewall 26. In this manner, the detents 24 and spring fingers 64 have a positive latching position. The ends of the connectors 102c, 102d, adjacent to the recess 74, are actually in a noncontacting relationship with the recess 74. In this manner, the end faces of the optical fibers 104c, 104d are axially spring loaded into the end faces of the optical face of the intermediate needle. In this manner, the two mating needle faces are axially spring loaded and, furthermore, this allows more tolerance within the system design. Over extension of the end faces of the optical fibers 104a-d is allowable as the intermediate optical fiber 92 is somewhat free to move at each end within respective pins 76, 76'. The two end faces will however, always be in a biased relationship against each other as the plated optical fiber spring loads the two end faces together.

As best shown in Figure 1, the two housing halves include openings for access to the end walls 78 and 78' of the switch plates 60, 60' such that the switch plates can be activated by means exterior of the switch housing formed by the two housing halves 4 and 4'. If a simple switching operation is to be used where simultaneous and instantaneous switching is not required, the switch plates 60 could simply include tabs which would protrude through the recesses for manual switching by an operator's hand. However, if simultaneous and instantaneous switching is required, such as where a new fiber optic cable is being inserted within a transmission line where the length of the new optical fiber being inserted is substantial, the switches 2 could include an electromechanical switching mechanism such as a solenoid which could be activated by a radiocontrolled mechanism. In this manner, the switches at opposite ends could be activated instantaneously thereby precluding transmission loss within the fiber.

By using an optical needle for the switching media, the switching mass is reduced to a minimum to allow high speed switching with low bounce. Furthermore, by using an optical needle, the needle provides for its own spring force maintaining the needle accurately within its alignment grooves, without the necessity of an external compression member.

The second embodiment of the present invention, is shown in Figure 8 in which an array of needles, typically referred to as a ribbon fiber cable, are used as the switching media rather than a single needle. For simplicity, Figure 8 only shows a cutaway portion of the switch, although it should be understood that the housing halves 204, 204' are identical.

In this embodiment, several intermediate needles 292 are included which can be switched into and out of contact with the optic fibers 204a-d. The island 228 includes a plurality of V-grooves to receive the respective needles to align the optic fiber ends with the ends of the intermediate optic fiber 292. The housing half 204 includes square channels 208 to receive the arrays of optic fibers which are interconnected by a connector for ribbon fiber cable, or simply by a splicing box in which the several fibers are fused or adhesively affixed within the splice box. In all other respects, the second embodiment is the same as the first embodiment, the housings are of course modified somewhat to accomodate the plurality of optic fibers.

## Claims

1. An optical switch for varying the light path of an optical fiber includes a first optical fiber which is movable between first and second positions which places the first optical fiber (92) into alignment with either a second (104a,104c) or third (104b,104d) optical fiber, and alignment means for aligning the first (92) and second (104a,104c), and first (92) and third (104b,104d) optical fibers in alignment with end faces of the fibers in an opposed relationship, the switch being characterized in that:
the alignment means includes means to move the second (104a,104c) or third (104b,104d) optical fibers along an axial direction out of an abutting relationship with the first (92) said optical fiber during the transverse movement of the opposed end faces, and the second (104a,104c) or third (104b,104d) optical fibers into an abutting relationship when respective opposed end faces are aligned.

2. An optical switch according to claim 1, characterized in that the second (104a,104c) and third (104b,104d) optical fibers include a band (102a,102c,102b,102d) recessed from the end of the fiber and the moving means includes a plate member (60,60') movable in a transverse direction relative to the length of the fibers (104a-d), the plate (60,60') including a recessed portion (74,74') at one side which faces the band, the plate portion being movable between first and second positions in which the recessed portion (74,74') comes into and out of alignment with the second (104a,104c) and third (104b,104d) fibers, a fiber in alignment with the recessed portion (74,74') moving axially forward and into an abutting relationship with the end of the first fiber (92).

3. An optical switch according to claim 2, characterized in that the plate (60,60') includes spring means (64,64') which'spring loads said switch plate (60,60') towards said bands (102a-d).

4. An optical switch for varying the light path of an optical fiber including a first optical fiber (292) which is movable between first and second positions which places the first optical fiber (292) into alignment with either a second (204a,204c) or third (204b,204d) optical fiber, and alignment means for aligning the first (292) and second (204a,204c), and first (292) and third (204b,204d) optical fibers in alignment with end faces of the fibers in opposed relationship, the alignment means including two channels (238,238') extending substantially along the length of the second and third fibers (204a-d) and the first said fiber (292) being movable between the two channels (238,238') into and out of alignment with the second (204a,204c) and third (204b,204d) fibers, the switch being characterized in that:
a plurality of first optical fibers (292) are included which upstand in a direction which is transverse to their length and a like plurality of second (204a,204c) and third (204b,204d) optical fibers are included, the movement of the first optical fibers (292) causing the alignment between respective first optical fiber ends with either the second optical fiber ends or the third optical fiber ends, the alignment means including means to move the second (204a,204c) or third (204b,204d) optical fibers along an axial direction out of abutting relationship with the first optical fibers (292) during the transverse movement of the opposed end faces, and the second (204a,204c) or third (204b,204d) optical fibers into abutting relationship when respective opposed end faces are aligned.

## Patentansprüche

1. Optischer Schalter zur Veränderung des Lichtpfades einer optischen Faser, mit einer ersten optischen Faser, die zwischen ersten und zweiten Stellungen bewegbar ist, wodurch die erste optische Faser (92) in Ausrichtung mit entweder einer zweiten (104a, 104c) oder einer dritten (104b, 104d) optischen Faser gebracht wird, und mit einem Ausrichtmittel zum Ausrichten der ersten (92) und der zweiten (104a, 104c) und zum Ausrichten der ersten (92) und der dritten (104b, 104d) optischen Fasern in Ausrichtung mit Endflächen der Fasern in einer gegenüberliegenden Beziehung, wobei der Schalter dadurch **gekennzeichnet** ist, daß das Ausrichtmittel eine Einrichtung zum Bewegen der zweiten (104a, 104c) oder der dritten (104b, 104d) optischen Faser längs einer axialen Richtung aus einer anliegenden Beziehung mit der ersten optischen Faser (92) während der Querbewegung der gegenüberliegenden Endflächen und der zweiten (104a, 104c) oder der dritten (104b, 104d) optischen Faser in eine anliegende Beziehung, wenn entsprechende gegenüberliegende Endflächen miteinander ausgerichtet sind, aufweist.

2. Optischer Schalter nach Anspruch 1, dadurch **gekennzeichnet**, daß die zweiten (104a, 104c) und dritten (104b, 104d) optischen Fasern ein Band (102a, 102c, 102b, 102d) aufweisen, das von dem Ende der Faser zurückgesetzt ist, und daß die Bewegungseinrichtung ein Plattenglied (60, 60') aufweist, das in einer Querrichtung relativ zu der Länge der Fasern (104a-d) bewegbar ist, wobei die Platte (60, 60') einen ausgenommenen Abschnitt (74, 74') auf einer Seite aufweist, die zu dem Band weist, wobei das Plattenglied zwischen ersten und zweiten Stellungen bewegbar ist, in denen der ausgenommene Abschnitt (74, 74') in und außer Ausrichtung mit den zweiten (104a, 104c) und dritten (104b, 104d) Fasern kommt, wobei eine Faser in Ausrichtung mit dem ausgenommenen Abschnitt (74, 74') sich axial vorwärts und in anliegende Beziehung mit dem Ende der ersten Faser (92) bewegt.

3. Optischer Schalter nach Anspruch 2, dadurch **gekennzeichnet**, daß die Platte (60, 60') ein Federmittel (64, 64') aufweist, das die Schaltplatte (60, 60') mit einer Federbelastung auf die Bänder (102a-d) zu beaufschlagt.

4. Optischer Schalter zum Variieren des Lichtpfads einer optischen Faser, mit einer ersten optischen Faser (292), die zwischen ersten und zweiten Stellungen bewegbar ist, der die erste optische Faser (292) in Ausrichtung mit entweder einer zweiten (204a, 204c) oder einer dritten (204b, 204d) optischen Faser bringt, und mit Ausrichtmitteln zum Ausrichten der ersten (292) und der zweiten (204a, 204c) und der ersten (292) und der dritten (204b, 204d) optischen Fasern in Ausrichtung mit Endflächen der Fasern in gegenüberliegender Beziehung, wobei die Ausrichtmittel zwei Kanäle (238, 238') aufweisen, die sich im wesentlichen längs der Länge der zweiten und dritten Fasern (204a-d) erstrecken und wobei die erste Faser (292) zwischen den beiden Kanälen (238, 238') in und außer Ausrichtung mit der zweiten (204a, 204c) und der dritten (204b, 204d) Faser bewegbar ist, wobei der Schalter dadurch **gekennzeichnet** ist, daß eine Vielzahl von ersten optischen Fasern (292) vorgesehen ist, die in einer Richtung übereinanderstehen, die quer zu ihrer Länge ist, und daß eine gleiche Vielzahl von zweiten (204a, 204c) und dritten (204b, 204d) optischen Fasern vorgesehen ist, daß die Bewegung der ersten optischen Fasern (292) die Ausrichtung zwischen entsprechenden ersten optischen Faserenden mit entweder den zweiten optischen Faserenden oder den dritten optischen Faserenden verursacht, daß die Ausrichtmittel eine Einrichtung zum Bewegen der zweiten (204a, 204c) oder der dritten (204b, 204d) optischen Fasern längs einer axialen Richtung aus einer anliegenden Beziehung mit den ersten optischen Fasern (292) während der Querbewegung der gegenüberliegenden Endflächen und der zweiten (204a, 204c) oder dritten (204b, 204d) optischen Fasern in anliegende Beziehung, wenn entsprechende gegenüberliegende Endflächen miteinander ausgerichtet sind, aufweisen.

## Revendications

1. Commutateur optique destiné à faire varier le trajet lumineux d'une fibre optique, comprenant une première fibre optique qui est mobile entre des première et seconde positions plaçant la première fibre optique (92) en alignement avec une deuxième (104a, 104c) ou une troisième (104b, 104d) fibre optique, et des moyens d'alignement destinés à aligner les première (92) et deuxième (104a, 104c) et les première (92) et troisième (104b, 104d) fibres optiques de façon que des faces extrêmes des fibres soient opposées entre elles, le commutateur étant caractérisé en ce que :
des moyens d'alignement comprennent des moyens destinés à déplacer la deuxième (104a, 104c) ou troisième (104b, 104d) fibre optique suivant une direction axiale hors d'une disposition en butée avec ladite première fibre optique (92) durant un mouvement transversal des faces extrêmes opposées, et la deuxième (104a, 104c) ou troisième (104b, 104d) fibre optique jusque dans une disposition en butée lorsque des faces extrêmes opposées respectives sont alignées.

2. Commutateur optique selon la revendication 1, caractérisé en ce que les deuxième (104, 104c) et troisième (104b, 104d) fibres optiques comprennent un manchon (102a, 102c, 102b, 102d) en retrait de l'extrémité de la fibre et les moyens de déplacement comprennent un élément à plaque (60, 60') mobile dans une direction transversale par rapport àla longueur des fibres (104a-d), la plaque (60, 60') comprenant une partie évidée (74, 74') sur un côté qui fait face au manchon, la partie à plaque étant mobile entre des première et seconde positions dans lesquelles la partie évidée (74, 74') vient en alignement et hors d'alignement avec les deuxième (104a, 104c) et troisième (104b, 104d) fibres, une fibre en alignement avec la partie évidée (74, 74') se déplaçant axialement vers l'avant et jusqu'en relation de butée avec l'extrémité de la première fibre (92).

3. Commutateur optique selon la revendication 2, caractérisé en ce que la plaque (60, 60') comprend un moyen à ressort (64, 64') qui applique une charge de ressort à ladite plaque (60, 60') de commutation en direction desdits manchons (102a-d).

4. Commutateur optique destiné à faire varier le trajet lumineux d'une fibre optique, comprenant une première fibre optique (292) qui est mobile entre des première et seconde positions plaçant la première fibre optique (292) en alignement avec une deuxième (204a, 204c) ou une troisième (204b, 204d) fibre optique, et des moyens d'alignement destinés à aligner les première (292) et deuxième (204a, 204c), et les première (292) et troisième (204b, 204d) fibres optiques en alignement avec des faces extrêmes des fibres dans une disposition opposée, les moyens d'alignement comprenant deux canaux (238, 238') s'étendant sensiblement sur la longueur des deuxième et troisième fibres (204a-d) et ladite première fibre (292) étant mobile entre les deux canaux (238, 238') jusqu'en alignement et hors d'alignement avec les deuxième (204a, 204c) et troisième (204b, 204d) fibres, le commutateur étant caractérisé en ce que :
il comporte plusieurs premières fibres optiques (292) qui s'élèvent dans une direction qui est transversale à leur longueur et un nombre identique de deuxièmes (204a, 204c) et troisièmes (204b, 204d) fibres optiques, le mouvement des premières fibres optiques (292) provoquant l'alignement des extrémités respectives des premières fibres optiques avec les extrémités des deuxièmes fibres optiques ou les extrémités des troisièmes fibres optiques, les moyens d'alignement comprenant des moyens destinés à déplacer les deuxièmes (204a, 204c) ou troisièmes (204b, 204d) fibres optiques suivant une direction axiale en dehors d'une disposition en butée avec les premières fibres optiques (292) durant le mouvement transversal des faces extrêmes opposées, et les deuxièmes (204a, 204c) ou troisièmes (204b, 204d) des fibres optiques jusque dans une disposition en butée lorsque les faces extrêmes opposées respectives sont alignées.
